(19) Europäisches Patentamt
European Patent Office
Office européen des brevets

(11)  **EP 3 295 536 B1**

(12)  **EUROPÄISCHE PATENTSCHRIFT**

(45) Veröffentlichungstag und Bekanntmachung des Hinweises auf die Patenterteilung:
**14.12.2022   Patentblatt 2022/50**

(21) Anmeldenummer: **16724015.9**

(22) Anmeldetag: **13.05.2016**

(51) Internationale Patentklassifikation (IPC):
***H02J 7/00*** *(2006.01)*

(52) Gemeinsame Patentklassifikation (CPC):
**H02J 7/0031; H02J 7/0029;** H02H 3/044

(86) Internationale Anmeldenummer:
**PCT/EP2016/060893**

(87) Internationale Veröffentlichungsnummer:
**WO 2016/184815 (24.11.2016 Gazette 2016/47)**

(54)  **BATTERIESYSTEM, INSBESONDERE FÜR EIN KRAFTFAHRZEUG**

BATTERY SYSTEM, IN PARTICULAR FOR A MOTOR VEHICLE

SYSTÈME DE BATTERIE, EN PARTICULIER POUR UN VÉHICULE À MOTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.05.2015   DE 102015006048**

(43) Veröffentlichungstag der Anmeldung:
**21.03.2018   Patentblatt 2018/12**

(73) Patentinhaber: **Marquardt GmbH**
**78604 Rietheim-Weilheim (DE)**

(72) Erfinder:
• **ZIMMERER, Matthias**
**78669 Wellendingen (DE)**
• **MATEJA, Darius**
**78594 Gunningen (DE)**
• **QADER, Taher**
**71111 Waldenbuch (DE)**

(74) Vertreter: **Staeger & Sperling**
**Partnerschaftsgesellschaft mbB**
**Sonnenstraße 19**
**80331 München (DE)**

(56) Entgegenhaltungen:
DE-A1-102011 003 279     DE-A1-102012 105 660
JP-A- 2013 005 528       JP-A- 2014 239 132
US-A1- 2006 139 006

**Beschreibung**

Die Erfindung betrifft ein Verfahren zum Test der Funktionsfähigkeit des zur Trennung der elektrischen Verbindung dienenden Trennelements in einem Batteriesystem nach dem Oberbegriff des Patentanspruchs 1.

Ein solches Verfahren kann insbesondere in einem Kraftfahrzeug eingesetzt werden.

Batteriesysteme sind beispielsweise aus der JP 2013-005528 A oder der DE 10 2008 040 810 A1 bekannt und umfassen eine wenigstens eine Batterie-und/oder Akkuzelle aufweisende Batterie. Mit der Batterie steht ein schaltbares Trennelement zur Trennung der elektrischen Verbindung der Batterie zu einer Versorgungsleitung für einen angeschlossenen Verbraucher in elektrischer Verbindung. Mit Hilfe des Trennelements kann dann in Notfällen das Batteriesystem abgeschaltet werden. Als Vorsorge für den Ausfall der Notabschaltung, insbesondere für eine Vorbeugung für einen solchen Ausfall, ist ein Mittel zum Test der Funktionsfähigkeit und/oder des Schaltzustands des zur Trennung der elektrischen Verbindung dienenden Trennelements vorgesehen.

Weitere Batteriesysteme, die ein Mittel zum Test der Funktionsfähigkeit des zur Trennung der elektrischen Verbindung dienenden Trennelements aufweisen, sind in der DE 10 2012 105 660 A1, in der US 2006/139006 A1, in der JP 2014-239132 A, in der DE 10 2011 004 516 A1, der DE 10 2012 2013 159 A1, in der DE 600 17 311 T2 und in der US 2015/0 035 539 A1 beschrieben. Schließlich zeigt die DE 10 2011 003 279 A1 einen Sensor zum Test der Funktionsfähigkeit eines Relais.

Der Erfindung liegt die Aufgabe zugrunde, ein Verfahren zum Test der Funktionsfähigkeit des zur Trennung der elektrischen Verbindung dienenden Trennelements in einem Batteriesystem bereitzustellen, sodass dessen Sicherheit für den Notfall weiter gesteigert ist.

Diese Aufgabe wird bei dem erfindungsgemäßen Verfahren durch die kennzeichnenden Merkmale des Anspruchs 1 gelöst.

Erfindungsgemäß wird daher ein Verfahren zum Test der Funktionsfähigkeit eines zur Trennung einer elektrischen Verbindung dienenden Trennelements eines Batteriesystems vorgeschlagen, wie es gemäß den Merkmalen des Hauptanspruchs bestimmt ist.

Bas Batteriesystem umfasst das Mittel zum Test der Funktionsfähigkeit eine Schaltung zur Erzeugung eines Teststroms. Die Schaltung zur Erzeugung eines Teststroms umfasst einen Leistungshalbleiter sowie einen Widerstand, wobei in kompakter Art der Leistungshalbleiter und/oder der Widerstand parallel zur Batterie angeordnet sind. Damit ist eine Art von Diagnose für das Trennelement geschaffen, so dass ein Ausfall des Trennelements rechtzeitig erkannt und dieses dann ersetzt werden kann, womit einer Beeinträchtigung der Sicherheit für das Batteriesystem entgegen gewirkt wird.

In einfacher sowie kostengünstiger Ausgestaltung kann es sich bei dem Trennelement um ein elektromechanisches Bauelement, wie einen elektrischen Schaltkontakt, einen elektrischen Schalter, ein Relais, ein bistabiles Relais o. dgl. handeln. In bevorzugter Weise kann es sich bei der Batterie um eine Lithium-Ionen-Batterie handeln. Das Batteriesystem ist für beliebige Verbraucher geeignet, insbesondere kann es sich bei dem Verbraucher um eine mit elektrischer Energie zu versorgende Last und/oder um einen elektrische Energie erzeugenden Generator handeln.

In einer einfach arbeitenden Ausgestaltung kann der Teststrom von der Schaltung zur Erzeugung eines Teststroms als ein Stromimpuls bereitgestellt werden. Es kann sich in kostengünstiger Art und Weise bei dem Leistungshalbleiter in der Schaltung zur Erzeugung eines Teststroms um einen MOSFET-Transistor handeln.

Das Mittel zum Test der Funktionsfähigkeit umfasst eine parallel zum Trennelement angeordnete, schaltbare Bypass-Schaltung. Damit kann auch bei abgeschaltetem Batteriesystem ein Teststrom bereitgestellt werden. In kostengünstiger Art umfasst die Bypass-Schaltung wenigstens einen Leistungshalbleiter, insbesondere zwei MOSFET-Transistoren. Des Weiteren ist ein Mittel zur Messung des durch die Bypass-Schaltung fließenden Bypass-Stroms vorgesehen.

In herkömmlicher Art und Weise kann ein elektrischer Anschluss für den Anschluss der Versorgungsleitung des Verbrauchers am Batteriesystem vorgesehen sein. Des Weiteren kann eine elektrische Verbindungsleitung von der Batterie zum Anschluss vorgesehen sein. In kompakter Art und Weise kann das Trennelement in der elektrischen Verbindungsleitung angeordnet sein. Zweckmäßigerweise kann ein elektrischer Widerstand in der Art eines Shunts in der einen elektrischen Verbindungsleitung zur Messung des Stroms zum Verbraucher angeordnet sein. Selbstverständlich können auch mehrere Anschlüsse sowie Verbindungsleitungen für das Batteriesystem vorgesehen sein.

Zwecks einfachen und dennoch sehr funktionssicheren Betrieb des Batteriesystems ist ein Mikroprozessor zum Schalten des Trennelements und/oder für die Ansteuerung des Mittels zum Test der Funktionsfähigkeit des zur Trennung der elektrischen Verbindung dienenden Trennelements vorgesehen. Und zwar bewirkt der Mikroprozessor insbesondere die Ansteuerung für die Schaltung zur Erzeugung eines Teststroms und/oder die Ansteuerung der Bypass-Schaltung. Damit steuert der Mikroprozessor nicht nur das Schalten des Trennelements sondern führt auch die Diagnose für das Trennelement durch.

Für eine besonders bevorzugte Ausgestaltung des Batteriesystems ist Nachfolgendes festzustellen. Geschaffen ist vorzugsweise die Diagnose für ein bistabiles Relais als Trennelement in einer Batterie, insbesondere in einer Lithium-Ionen Batterie, womit die Zustände des Trennelements in der Batterie diagnostizierbar sind. Mit Hilfe eines solchen Batterie-Management-Systems ist die funktionale Sicherheit in einer Batterie gesteigert, was insbesondere für den Einsatz der Batterie in Automobilen wichtig ist. Weiter kann sichergestellt werden, dass das Trennelement, beispielsweise das Relais, auch im geschlossenen Zustand noch in der Lage ist, öffnen zu können.

Die mit der Erfindung erzielten Vorteile bestehen insbesondere darin, dass mit Hilfe einer solchen Verfahrens die Diagnosefähigkeit für das Batteriesystem sichergestellt werden kann, dass das Trennelement bzw. der Trennschalter im Notfall in der Lage ist, die Spannungsquelle vom Verbraucher zu trennen. Mittels der Diagnose kann der aktuelle Schaltzustand des Trennelements, beispielsweise des Relais, jederzeit sicher festgestellt werden.

Ein Ausführungsbeispiel der Erfindung mit verschiedenen Weiterbildungen und Ausgestaltungen ist in den Zeichnungen dargestellt und wird im Folgenden näher beschrieben. Es zeigen

Fig. 1　schematisch ein Batteriesystem mit einem Trennelement, wobei das Trennelement geöffnet ist,

Fig. 2　das Batteriesystem aus Fig. 1, wobei das Trennelement geschlossen ist und das Batteriesystem entladen wird,

Fig. 3　das Batteriesystem aus Fig. 1, wobei das Trennelement geschlossen ist und das Batteriesystem geladen wird,

Fig. 4　das Batteriesystem aus Fig. 3, wobei das Trennelement geöffnet ist,

Fig. 5　die nähere Ausgestaltung der Schaltungsanordnung für das Batteriesystem aus Fig. 1 und

Fig. 6　ein Diagramm für die Funktionsweise der Diagnose für das Batteriesystem.

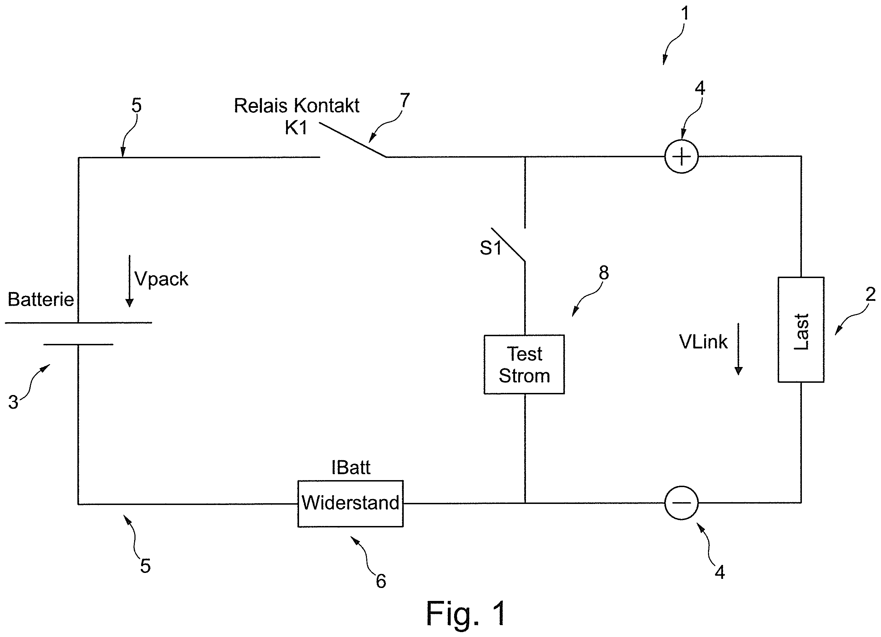

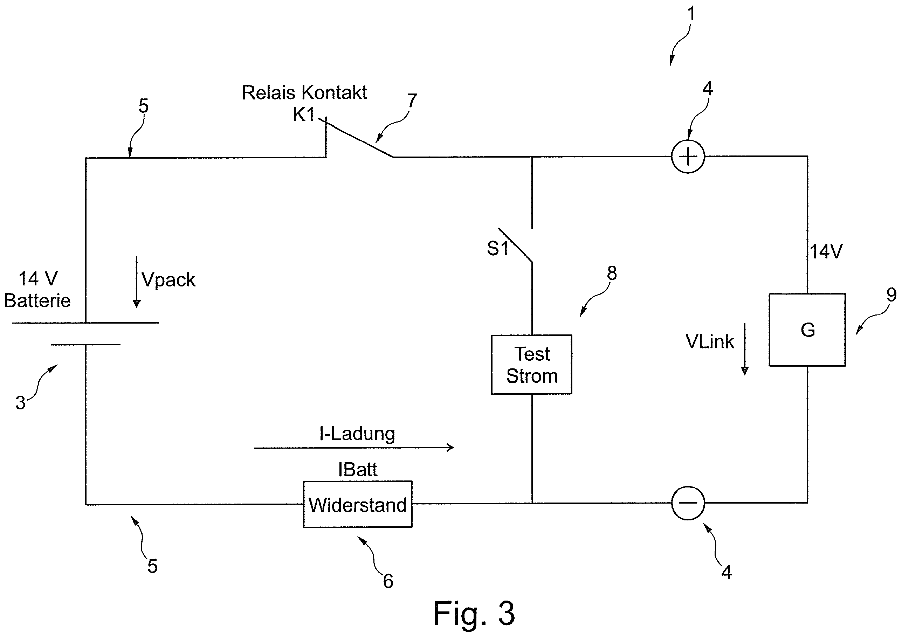

In Fig. 1 ist ein Batteriesystem 1 für ein Kraftfahrzeug zu sehen. Das Batteriesystem 1 umfasst eine Batterie 3, die wenigstens eine Batterie- und/oder Akkuzelle aufweist, beispielsweise eine Lithium-Ionen-Batterie, sowie elektrische Anschlüsse 4 für den Anschluss von Versorgungsleitungen eines elektrischen Verbrauchers 2. Beim Verbraucher kann es sich um eine mit elektrischer Energie zu versorgende Last 2 gemäß Fig. 1 und/oder um einen elektrische Energie erzeugenden Generator 9 gemäß Fig. 3 handeln. Von der Batterie 3 sind elektrische Verbindungsleitungen 5 zu den Anschlüssen 4 vorgesehen. Ein elektrischer Widerstand 6 in der Art eines Shunts ist in der einen elektrischen Verbindungsleitung 5 zur Messung des Stroms zum Verbraucher 2 angeordnet. Zwecks Trennung der elektrischen Verbindung zwischen dem Batteriesystem 1 und dem Verbraucher 2, also zur Abschaltung der elektrischen Verbindung mit der Batterie 3, insbesondere in Notfällen, steht ein in der anderen elektrischen Verbindungsleitung 5 angeordnetes, schaltbares Trennelement 7 mit der Batterie 3 in elektrischer Verbindung. Als Trennelement 7 ist vorliegend ein schaltbares elektromechanisches Bauelement vorgesehen. Bei dem elektromechanischen Bauelement 7 kann es sich um einen elektrischen Schaltkontakt, einen elektrischen Schalter, ein Relais, ein bistabiles Relais o. dgl. handeln. Das Batteriesystem 1 weist weiterhin ein Mittel 8 zum Test der Funktionsfähigkeit in der Art einer Diagnose des zur Trennung der elektrischen Verbindung dienenden Trennmittels 7 auf. Das Diagnosemittel 8 umfasst vorliegend eine Schaltung zur Erzeugung eines Teststroms, und zwar insbesondere eines Stromimpulses als Teststrom. Die nähere Arbeitsweise des Diagnosemittels 8 wird anhand der Fig. 1 bis Fig. 4 näher beschrieben. Dabei besitzen die nachfolgenden Bezeichnungen folgende Bedeutungen.

- $V_{Battery}$: Spannung des Batteriesystems 1,
- $V_{Pack}$: Spannung an der Batterie 3,
- $V_{Link}$: Spannungsabfall an der Last 2 und/oder Ladespannung eines externen Ladegeräts 9,
- $I_{Batt}$: Strom gemessen am Shunt 6.

Beispielhaft ist dabei eine im Kraftfahrzeug übliche 14V-Batterie, also $V_{Battery}$ = 14 V betrachtet, wobei selbstverständlich die Batterie 3 jedoch auch eine andere Spannung aufweisen kann.

Zunächst sei der erste Fall gemäß Fig. 1 betrachtet, nämlich dass der Schaltkontakt des Trennmittels 7 geöffnet ist. Das Diagnosemittel 8 erzeugt mit Hilfe eines Schaltmittels S1 einen Stromimpuls als Teststrom, indem

$$S1 = ON \rightarrow OFF$$

geschaltet wird. Dann ermittelt das Diagnosemittel 8 folgende Zustände:

- $V_{Pack}$ = $V_{Battery}$
- $V_{Link}$ ist ungefähr 0 V
- $I_{Batt}$ = 0 A (d.h. $I_{Batt}$ bleibt unverändert)

Da die Differenz zwischen $V_{Pack}$ und $V_{Link}$ sehr hoch ist und der Teststrom insoweit nicht detektiert wird, muss das Trennmittel 7 geöffnet sein.

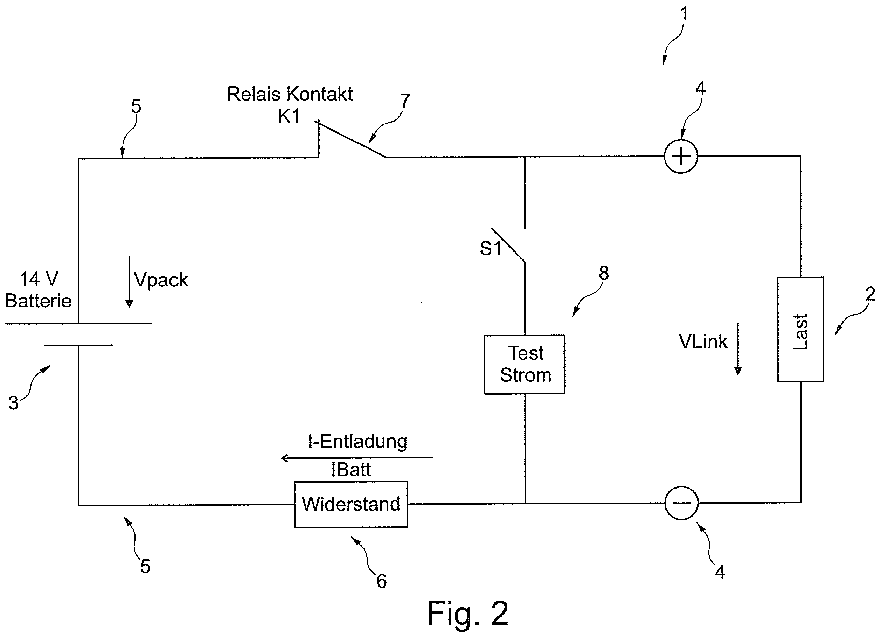

Weiter wird der zweite Fall gemäß Fig. 2 betrachtet, nämlich dass der Schaltkontakt des Trennmittels 7 geschlossen ist und die Spannungsversorgung der Last 2 eingeschaltet ist. Das Diagnosemittel 8 ermittelt nun folgende Zustände:

- $V_{Pack}$ = $V_{Battery}$
- $V_{Link}$ = $V_{Pack}$
- $I_{Batt}$ ist negativ, da ein Entladungsstrom kleiner 0 A gemessen wird.

Da die Spannung $V_{Link}$ gleich der Spannung $V_{Pack}$ ist und ein Entladungsstrom $I_{Batt}$ detektiert wird, ist das Trennmittel 7 geschlossen.

Desweiteren ist der dritte Fall gemäß Fig. 3 betrachtet, nämlich dass der Schaltkontakt des Trennmittels 7 geschlossen ist und die Batterie 3 mittels des als Generator 9 dienenden externen Ladegeräts aufgeladen wird. Das Diagnosemittel 8 erzeugt mit Hilfe des Schaltmittels S1 einen Stromimpuls als Teststrom, indem

$$S1 = ON \rightarrow OFF$$

geschaltet wird. Dann ermittelt das Diagnosemittel 8 folgende Zustände:

- $V_{Link} = V_{Pack}$
- $I_{Batt}$ entspricht dem Ladestrom, der größer als 0 A ist.

Somit hat sich $I_{Batt}$ gegenüber dem zweiten Fall verändert. Da der Ladestrom größer als 0 A ist oder der Teststrom detektiert wurde und $V_{Link} = V_{Pack}$ ist, ist das Trennmittel 7 geschlossen.

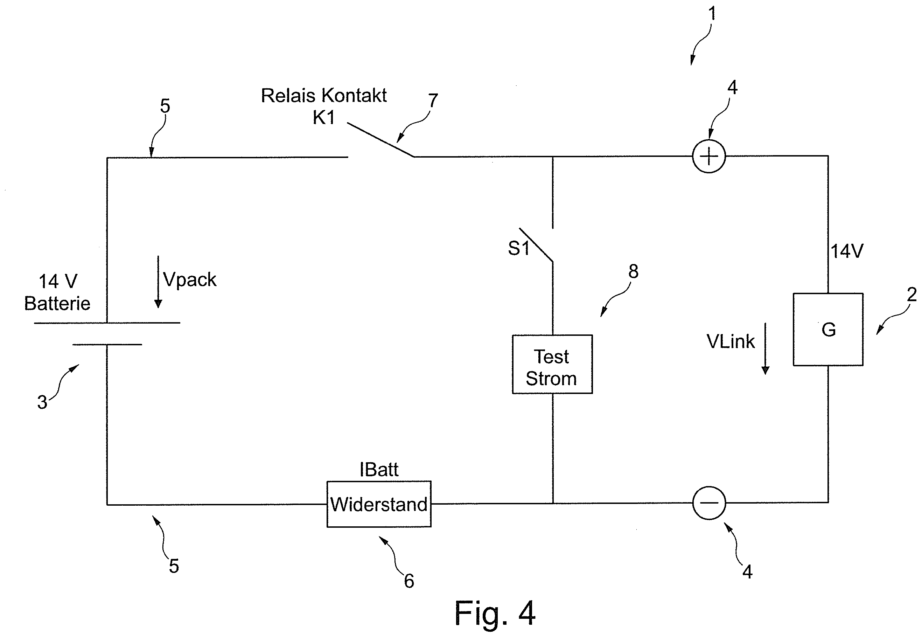

Schließlich ist noch der vierte Fall gemäß Fig. 4 betrachtet, nämlich dass der Schaltkontakt des Trennmittels 7 offen ist und die Batterie 3 sowie das externe Ladegerät 9 dasselbe Spannungsniveau besitzen. Das Diagnosemittel 8 erzeugt mit Hilfe des Schaltmittels S1 einen Stromimpuls als Teststrom, indem

$$S1 = ON \rightarrow OFF$$

geschaltet wird. Dann ermittelt das Diagnosemittel 8 folgende Zustände:

- $V_{Pack} = V_{Link}$
- IBatt = 0 A

Somit hat sich $I_{Batt}$ gegenüber dem ersten Fall nicht verändert. Da die Differenz zwischen $V_{Pack}$ und $V_{Link}$ ungefähr 0 V, d.h. auf beiden Seiten des geöffneten Trennmittels 7 ist dasselbe Spannungspotential vorhanden, sowie der Strom 0 A betragen und der Teststrom insoweit nicht detektiert wird, muss das Trennmittel 7 geöffnet sein.

Wie man anhand der vier betrachteten Fälle erkennt, ist somit anhand der vier Parameter

- $V_{Pack}$: Spannungsmessung an der Batterie 3 bzw. am Batteriepack,
- $V_{Link}$: Spannungsmessung an der Last 2 und/oder am Ladegerät 9 bzw. seitens des Kraftfahrzeugs,
- $I_{Batt}$: Strommessung für den Eingangs- sowie Ausgangs-Strom der Batterie 3 bzw. des Batteriepacks,
- $I_{Test}$: Größe des Teststroms, beispielsweise ein Stromimpuls von 1 A mit einer Dauer von 100 msec

der vollständige Status des Trennmittels 7 detektierbar.

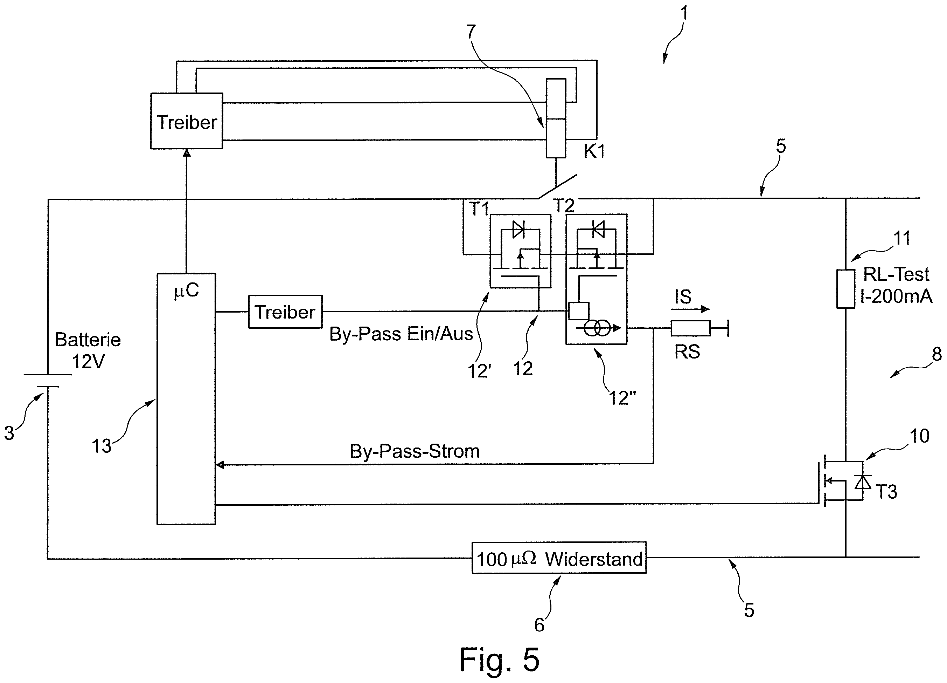

Die nähere Ausgestaltung des die Schaltung zur Erzeugung eines Teststroms umfassenden Diagnosemittels 8 ist der Fig. 5 zu entnehmen. Die Schaltung zur Erzeugung eines Teststroms umfasst einen Leistungshalbleiter 10, bei dem es sich vorliegend um einen MOSFET-Transistor T3 handelt, sowie einen Widerstand 11. Dabei sind der Leistungshalbleiter 10 und/oder der Widerstand 11 parallel zur Batterie 3 angeordnet. Parallel zum elektromechanischen Bauelement 7 ist eine schaltbare Bypass-Schaltung 12 vorgesehen. Die Bypass-Schaltung 12 umfasst wenigstens einen Leistungshalbleiter 12', 12", und zwar vorliegend zwei MOSFET-Transistoren T1, T2. Im Einzelnen sind dabei folgende Transistoren verwendet:

- T1, T2: Bypass, Trennschalter Überbrückung,
- T1: P-Kanal MOSFET-Transistor,
- T2: P-Kanal Smart-MOSFET-Transistor, geschützt gegen Überlast und/oder Kurzschluss und/oder Übertemperatur; T2 umfasst ein Mittel zur Messung des durch die Bypass-Schaltung 12 fließenden Bypass-Stroms und liefert somit den Diagnose-Strom,
- T3: N-Kanal MOSFET-Transistor, wobei T3 zum EIN/AUS-Schalten des Teststroms dient.

Weiter ist ein Mikroprozessor 13 zum Schalten des elektromechanischen Bauelements 7 und/oder für die Ansteuerung der Schaltung zur Erzeugung eines Teststroms bzw. des Diagnosemittels 8 und/oder für die Ansteuerung der Bypass-Schaltung 12 vorgesehen. Der aufgrund des Teststroms hervorgerufene Diagnose-Strom am Transistor T2 wird ebenfalls vom Mikroprozessor 13 detektiert und dementsprechend ausgewertet.

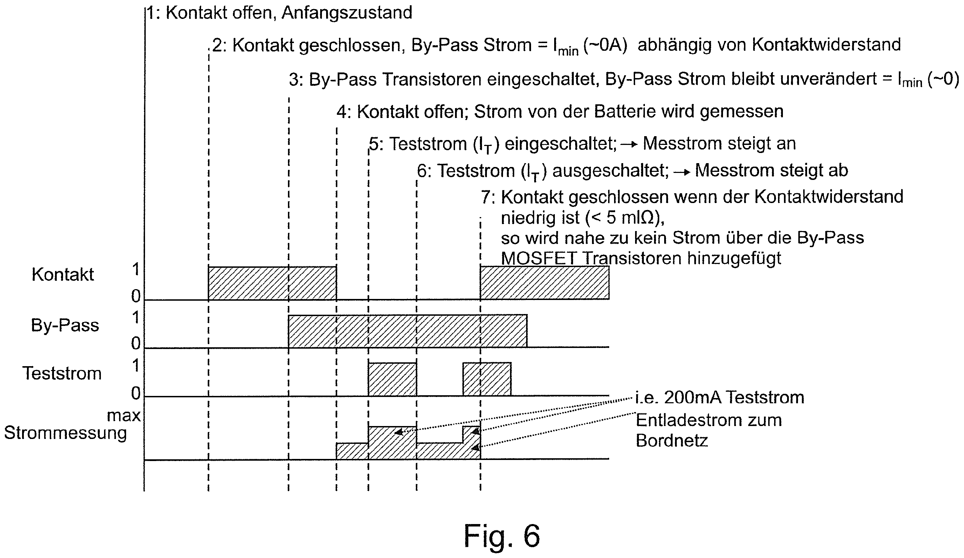

Die verschiedenen Schaltzustände des Trennmittels 7 sowie der Bypass-Schaltung 12, das Schalten des Teststroms und die Strommessung in der Bypass-Schaltung 12 sind in dem Diagramm gemäß Fig. 6 dargestellt. In Fig. 6 ist folgendes zu sehen:

- Zustand 1: Der Schaltkontakt des Trennmittels 7 ist offen; das Trennmittel 7 befindet sich im Initialisierungszustand.
- Zustand 2: Der Schaltkontakt des Trennmittels 7 ist geschlossen; der Bypass-Strom Imin beträgt in etwa 0 A in Abhängigkeit vom Kontaktwiderstand des Trennmittels 7.
- Zustand 3: Die Transistoren 12', 12" der Bypass-Schaltung 12 werden eingeschaltet; der Bypass-Strom bleibt unverändert Imin in etwa 0 A in Abhängigkeit vom Kontaktwiderstand des Trennmittels 7.
- Zustand 4: Der Schaltkontakt des Trennmittels 7 wird geöffnet; der aus der Batterie 3 entnommene Strom wird gemessen.
- Zustand 5: Der Teststrom $I_T$ von z.B. 200 mA wird mittels des Transistors 10 eingeschaltet; der gemessene Entladestrom im Bordnetz $I_{Batt}$ erhöht sich entsprechend (z.B. um 200 mA).

- Zustand 6: Der Teststrom $I_T$ wird mittels des Transistors 10 abgeschaltet; der gemessene Entladestrom im Bordnetz $I_{Batt}$ verringert sich wiederum entsprechend.
- Zustand 7: Der Schaltkontakt des Trennmittels 7 wird eingeschaltet; ist der Kontaktwiderstand des Trennmittels 7 sehr gering, also niederohmig von z.B. kleiner 5 m$\Omega$, so wird nahezu kein Strom über die Transistoren 12', 12" der Bypass-Schaltung 12 hinzukommen.

Liegen diese Zustände 1 bis 7 in der beschriebenen Weise vor, so arbeitet das Trennmittel 7 in funktionssicherer Weise. Werden hingegen Abweichungen bei den beschriebenen Zuständen 1 bis 7 detektiert, so kann daraus wiederum auf die mangelnde Funktionssicherheit und/oder Funktionsfähigkeit des Trennmittels 7 geschlossen werden. In diesem Fall kann dann rechtzeitig eine entsprechende Reparatur vorgenommen werden.

Die beschriebene Diagnose findet Anwendung in Batterie-Management-Systemen, welche insbesondere ein bistabiles Relais als Trennelement 7 verwenden. Dieses Batteriesystem 1 ist insbesondere zum Einsatz in einem Kraftfahrzeug geeignet. Die Erfindung ist jedoch nicht auf das beschriebene und dargestellte Ausführungsbeispiel beschränkt. Sie umfasst vielmehr auch alle fachmännischen Weiterbildungen im Rahmen der durch die Patentansprüche definierten Erfindung.

## Patentansprüche

1. Verfahren zum Test der Funktionsfähigkeit des zur Trennung der elektrischen Verbindung dienenden Trennelements (7) in einem Batteriesystem

   wobei das Batteriesystem eine wenigstens eine Batterie- und/oder Ackuzelle aufweisende Batterie (3) und ein mit der Batterie (3) in elektrischer Verbindung stehendes schaltbares Trennelement (7) zur Trennung der elektrischen Verbindung der Batterie (3) zu einer Versorgungsleitung für einen angeschlossenen Verbraucher (2) umfasst,
   wobei ein Mittel (8) zum Test der Funktionsfähigkeit des zur Trennung der elektrischen Verbindung dienenden Trennelements (7) vorgesehen ist,
   wobei das Mittel (8) zum Test der Funktionsfähigkeit eine Schaltung zur Erzeugung eines Teststroms umfasst, und die Schaltung zur Erzeugung eines Teststroms einen Leistungshalbleiter (10) sowie einen Widerstand (11) umfasst, wobei der Leistungshalbleiter (10) und/oder der Widerstand (11) parallel zur Batterie (3) angeordnet sind,
   wobei das Mittel (8) zum Test der Funktionsfähigkeit eine parallel zum Trennelement (7) angeordnete, schaltbare Bypass-Schaltung (12) umfasst,
ein Mittel zur Messung des durch die Bypass-Schaltung (12) fließenden Bypass-Stroms vorgesehen ist,
die Bypass-Schaltung (12) wenigstens einen Leistungshalbleiter (12', 12") umfasst,
**dadurch gekennzeichnet, dass** das Verfahren zumindest die folgenden Schritte umfasst:

   a. Schalten des Trennmittels (7) aus einem geöffneten Zustand als Initialisierungszustand in einen geschlossenen Zustand, wobei der Bypass-Strom $I_{min}$ einen von einem Kontaktwiderstand des Trennmittels (7) abhängigen Wert von in etwa 0 A aufweist;
   b. Einschalten der als Transistoren ausgebildeten Leistungshalbleiter (12', 12") der Bypass-Schaltung (12), wobei der Bypass-Strom $I_{min}$ unverändert bleibt;
   c. Schalten des Trennmittels (7) in einen geöffneten Zustand und Messen eines der Batterie (3) entnommenen Stroms $I_{Batt}$.
   d. Einschalten des Teststroms $I_T$ durch Schalten des als Transistors ausgebildeten Leistungshalbleiters (10) der Schaltung zur Erzeugung eines Teststroms und Messen des der Batterie (3) entnommenen Stroms $I_{Batt}$, welcher sich um den Teststrom $I_T$ erhöht;
   e. Abschalten des Teststroms $I_T$ durch Schalten des als Transistors ausgebildeten Leistungshalbleiters (10) der Schaltung zur Erzeugung eines Teststroms und Messen des der Batterie (3) entnommenen Stroms $I_{Batt}$, welcher sich um den Teststrom $I_T$ reduziert;
   f. Einschalten des durch einen Schaltkontakt gebildeten Trennmittels (7), wobei bei einem niedrigen Kontaktwiderstand des Trennmittels (7) nahezu kein Strom über die Leistungshalbleiter (12', 12") der Bypass-Schaltung (12) hinzukommt;

   wobei das Trennmittel (7) in funktionssicherer Weise arbeitet, wenn die Schritte a bis f wie beschrieben vorliegen und das Trennmittel (7) bei Abweichungen nicht funktionssicher arbeitet und nicht funktionsfähig ist.

2. Batteriesystem für ein Kraftfahrzeug, welches zur Durchführung eines Verfahrens gemäß Anspruch 1 ausgebildet ist,

   wobei das Batteriesystem eine wenigstens eine Batterie- und/oder Ackuzelle aufweisende Batterie (3) und ein mit der Batterie (3) in elektrischer Verbindung stehendes schaltbares Trennelement (7) zur Trennung der elektrischen Verbindung der Batterie (3) zu einer Versorgungsleitung für einen angeschlossenen Verbraucher (2) umfasst,

wobei ein Mittel (8) zum Test der Funktionsfähigkeit des zur Trennung der elektrischen Verbindung dienenden Trennelements (7) vorgesehen ist,

wobei das Mittel (8) zum Test der Funktionsfähigkeit eine Schaltung zur Erzeugung eines Teststroms umfasst,

und die Schaltung zur Erzeugung eines Teststroms einen Leistungshalbleiter (10) sowie einen Widerstand (11) umfasst, wobei der Leistungshalbleiter (10) und/oder der Widerstand (11) parallel zur Batterie (3) angeordnet sind,

wobei das Mittel (8) zum Test der Funktionsfähigkeit eine parallel zum Trennelement (7) angeordnete, schaltbare Bypass-Schaltung (12) umfasst,

ein Mittel zur Messung des durch die Bypass-Schaltung (12) fließenden Bypass-Stroms vorgesehen ist,

die Bypass-Schaltung (12) wenigstens einen Leistungshalbleiter (12', 12") umfasst.

3. Batteriesystem nach Anspruch 2, **dadurch gekennzeichnet, dass** es sich bei dem Trennelement (7) um ein elektromechanisches Bauelement handelt.

4. Batteriesystem nach Anspruch 3, **dadurch gekennzeichnet, dass** es sich bei dem elektromechanischen Bauelement um einen elektrischen Schaltkontakt, einen elektrischen Schalter, ein Relais oder ein bistabiles Relais handelt.

5. Batteriesystem nach Anspruch 2, 3 oder 4, **dadurch gekennzeichnet, dass** es sich bei der Batterie (3) um eine Lithium-Ionen-Batterie handelt.

6. Batteriesystem nach einem der Ansprüche 2 bis 5, **dadurch gekennzeichnet, dass** es sich bei dem Verbraucher (2) um eine mit elektrischer Energie zu versorgende Last (2) und/oder um einen elektrische Energie erzeugenden Generator (9) handelt.

7. Batteriesystem nach einem der Ansprüche 2 bis 6, **dadurch gekennzeichnet, dass** das Mittel (8) ausgebildet ist, zum Test der Funktionsfähigkeit einen Stromimpuls zu erzeugen.

8. Batteriesystem nach einem der Ansprüche 2 bis 7, **dadurch gekennzeichnet, dass** es sich bei dem Leistungshalbleiter (10) um einen MOSFET-Transistor handelt.

9. Batteriesystem nach einem der Ansprüche 2 bis 8, **dadurch gekennzeichnet, dass** die Bypass-Schaltung (12) zwei MOSFET-Transistoren umfasst.

10. Batteriesystem nach einem der Ansprüche 2 bis 9, **dadurch gekennzeichnet, dass** ein elektrischer Anschluss (4) für den Anschluss der Versorgungsleitung des Verbrauchers (2) vorgesehen ist, dass eine elektrische Verbindungsleitung (5) von der Batterie (3) zum Anschluss (4) vorgesehen ist, und dass das Trennelement (7) in der elektrischen Verbindungsleitung (5) angeordnet ist.

11. Batteriesystem nach Anspruch 10, **dadurch gekennzeichnet, dass** ein elektrischer Widerstand (6) in der einen elektrischen Verbindungsleitung (5) zur Messung des Stroms zum Verbraucher (2) angeordnet ist.

12. Batteriesystem nach einem der Ansprüche 2 bis 11, **dadurch gekennzeichnet, dass** ein Mikroprozessor (13) zum Schalten des Trennelements (7) und/oder für die Ansteuerung des Mittels (8) zum Test der Funktionsfähigkeit des zur Trennung der elektrischen Verbindung dienenden Trennelements (7) vorgesehen ist.

13. Batteriesystem nach Anspruch 12, **dadurch gekennzeichnet, dass** der Mikroprozessor (13) für die Ansteuerung der Schaltung zur Erzeugung eines Teststroms und/oder für die Ansteuerung der Bypass-Schaltung (12) dient.

**Claims**

1. A method for testing the functionality of the isolator (7) used to disconnect the electrical connection in a battery system,

wherein the battery system comprises a battery (3) having at least one battery and/or accumulator cell and a switchable isolator (7) that is electrically connected to the battery (3) for disconnecting the electrical connection of the battery (3) to a power supply line for a connected consumer (2),

wherein a means (8) for testing the functionality of the isolator (7) used to disconnect the electrical connection is provided,

wherein the means (8) for testing the functionality comprises a circuit for generating a test current, and the circuit for generating a test current comprises a power semiconductor (10) and a resistor (11), the power semiconductor (10) and/or the resistor (11) being arranged parallel to the battery (3),

wherein the means (8) for testing the functionality comprises a switchable bypass circuit (12) that is arranged parallel to the isolator (7), a means for measuring the bypass current flowing through the bypass circuit (12) is provided, and the bypass circuit (12) comprises at least one power semiconductor (12', 12"), **characterized in that** the method comprises at least the following steps:

> a. Switching the isolator (7) from an open state as an initialization state to a closed state, the bypass current $I_{min}$ having a value of approximately 0 A, which is dependent on a contact resistance of the isolator (7);
> b. Switching on the power semiconductors (12', 12") of the bypass circuit (12), which are embodied as transistors, with the bypass current $I_{min}$ remaining unchanged;
> c. Switching the isolator (7) to an open state and measuring a current $I_{Batt}$ drawn from the battery (3);
> d. Switching on the test current $I_T$ by switching the power semiconductor (10), which is embodied as a transistor, of the circuit for generating a test current and measuring the current $I_{Batt}$ drawn from the battery (3), which increases by the test current $I_T$;
> e. Switching off the test current $I_T$ by switching the power semiconductor (10), which is embodied as a transistor, of the circuit for generating a test current and measuring the current $I_{Batt}$ drawn from the battery (3), which is reduced by the test current $I_T$;
> f. Switching on the isolator (7), which is formed by a switching contact, with a low contact resistance of the isolator (7) adding almost no current via the power semiconductors (12', 12") of the bypass circuit (12);

the isolator (7) operating in a functionally reliable manner if steps a to f are present as described, and the isolator (7) not operating in a functionally reliable manner and not being functional in the event of deviations.

2. A battery system for a motor vehicle that is designed to carry out a method according to claim 1,

> wherein the battery system comprises a battery (3) having at least one battery and/or accumulator cell and a switchable isolator (7) that is electrically connected to the battery (3) for disconnecting the electrical connection of the battery (3) to a power supply line for a connected consumer (2),
> wherein a means (8) for testing the functionality of the isolator (7) used to disconnect the electrical connection is provided,
> wherein the means (8) for testing the functionality comprises a circuit for generating a test current, and the circuit for generating a test current comprises a power semiconductor (10) and a resistor (11),
wherein the power semiconductor (10) and/or the resistor (11) are arranged parallel to the battery (3),
and wherein the means (8) for testing the functionality comprises a switchable bypass circuit (12) that is arranged parallel to the isolator (7), a means for measuring the bypass current flowing through the bypass circuit (12) is provided, and the bypass circuit (12) comprises at least one power semiconductor (12', 12"),

3. The battery system as set forth in claim 2, **characterized in that** the isolator (7) is an electromechanical component.

4. The battery system as set forth in claim 3, **characterized in that** the electromechanical component is an electrical switching contact, an electrical switch, a relay, or a bistable relay.

5. The battery system as set forth in claim 2, 3 or 4, **characterized in that** the battery (3) is a lithium-ion battery.

6. The battery system as set forth in any one of claims 2 to 5, **characterized in that** the consumer (2) is a load (2) to be supplied with electrical energy and/or a generator (9) which produces electrical energy.

7. The battery system as set forth in any one of claims 2 to 6, **characterized in that** the means (8) is designed to generate a current pulse to test the functionality.

8. The battery system set as set forth in any one of claims 2 to 7, **characterized in that** the power semiconductor (10) is a MOSFET transistor.

9. The battery system as set forth in any one of claims 2 to 8, **characterized in that** the bypass circuit (12) comprises two MOSFET transistors.

10. The battery system as set forth in any one of claims 2 to 9, **characterized in that** an electrical terminal (4) is provided for connecting the power supply line of the consumer (2), that an electrical connecting line (5) is provided from the battery (3) to the terminal (4), and that the isolator (7) is arranged in the electrical connecting line (5).

11. The battery system as set forth in claim 10, **characterized in that** an electrical resistor (6) is arranged in one electrical connecting line (5) for measuring the current to the consumer (2).

**12.** The battery system as set forth in any one of claims 2 to 11, **characterized in that** a microprocessor (13) for switching the isolator (7) and/or for controlling the means (8) for testing the functionality of the isolator (7), which is used to disconnect the electrical connection, is provided.

**13.** The battery system as set forth in claim 12, **characterized in that** the microprocessor (13) is used to control the circuit for generating a test current and/or to control the bypass circuit (12).

**Revendications**

**1.** Procédé permettant de tester la fonctionnalité de l'élément d'interruption (7) servant à interrompre la liaison électrique dans un système de batterie,

dans lequel le système de batterie comprend une batterie (3) présentant au moins une cellule de batterie et/ou d'accumulateur et un élément d'interruption commutable (7) en liaison électrique avec la batterie (3), destiné à interrompre la liaison électrique de la batterie (3) avec une ligne d'alimentation pour un consommateur connecté (2),
dans lequel un moyen (8) pour tester la fonctionnalité de l'élément d'interruption (7) servant à l'interruption de la liaison électrique est prévu,
dans lequel le moyen (8) pour tester la fonctionnalité comprend un circuit pour produire un courant d'essai, et le circuit pour produire un courant d'essai comprend un semi-conducteur de puissance (10) ainsi qu'une résistance (11), le semi-conducteur de puissance (10) et/ou la résistance (11) étant disposés en parallèle à la batterie (3),
dans lequel le moyen (8) pour tester la fonctionnalité comprend un circuit de dérivation commutable (12) disposé en parallèle à l'élément d'interruption (7),
un moyen pour mesurer le courant de dérivation passant par le circuit de dérivation (12) est prévu,
le circuit de dérivation (12) comprend au moins un semi-conducteur de puissance (12', 12"),
**caractérisé en ce que** le procédé comprend au moins les étapes suivantes consistant à :

a) commuter le moyen d'interruption (7) d'un état ouvert comme état d'initialisation à un état fermé, le courant de dérivation $I_{min}$ présentant une valeur d'environ 0 A dépendant d'une résistance de contact du moyen d'interruption (7) ;
b) mettre en circuit les semi-conducteurs de puissance (12', 12"), réalisés sous forme de transistors, du circuit de dérivation (12), le courant de dérivation $I_{min}$ restant inchangé ;
c) commuter le moyen d'interruption (7) à un état ouvert et mesurer un courant $I_{Batt}$ prélevé sur la batterie (3) ;
d) mettre en circuit le courant d'essai $I_T$ en commutant le semi-conducteur de puissance (10), réalisé sous forme de transistor, du circuit pour produire un courant d'essai, et mesurer le courant $I_{Batt}$ prélevé sur la batterie (3) qui augmente du courant d'essai $I_T$ ;
e) mettre hors circuit le courant d'essai $I_T$ en commutant le semi-conducteur de puissance (10), réalisé sous forme de transistor, du circuit pour produire un courant d'essai, et mesurer le courant $I_{Batt}$ prélevé sur la batterie (3) qui diminue du courant d'essai $I_T$ ;
f) mettre en circuit le moyen d'interruption (7) formé par un contact de commutation, dans lequel, pour une résistance de contact faible du moyen d'interruption (7), presque aucun courant n'est ajouté par l'intermédiaire des semi-conducteurs de puissance (12', 12") du circuit de dérivation (12) ;

dans lequel le moyen d'interruption (7) fonctionne de manière fiable lorsque les étapes a à f sont présentes telles que décrites, et le moyen d'interruption (7) ne fonctionne pas de manière fiable et n'est pas opérationnel en cas d'écarts.

**2.** Système de batterie pour un véhicule automobile qui est réalisé pour exécuter un procédé selon la revendication 1,

dans lequel le système de batterie comprend une batterie (3) présentant au moins une cellule de batterie et/ou d'accumulateur et un élément d'interruption commutable (7) en liaison électrique avec la batterie (3) pour interrompre la liaison électrique de la batterie (3) avec une ligne d'alimentation pour un consommateur connecté (2),
dans lequel un moyen (8) pour tester la fonctionnalité de l'élément d'interruption (7) servant à l'interruption de la liaison électrique est prévu,
dans lequel le moyen (8) pour tester la fonctionnalité comprend un circuit pour produire un courant d'essai,
et le circuit pour produire un courant d'essai comprend un semi-conducteur de puissance (10) ainsi qu'une résistance (11), le semi-conducteur de puissance (10) et/ou la résistance (11) étant disposés en parallèle à la batterie (3),
dans lequel le moyen (8) pour tester la fonctionnalité comprend un circuit de dérivation commutable (12) disposé en parallèle à l'élément d'interruption (7),
un moyen pour mesurer le courant de dérivation passant par le circuit de dérivation (12) est prévu,
le circuit de dérivation (12) comprend au moins un semi-conducteur de puissance (12', 12").

**3.** Système de batterie selon la revendication 2, **caractérisé en ce que** l'élément d'interruption (7) est un composant électromécanique.

**4.** Système de batterie selon la revendication 3, **caractérisé en ce que** le composant électromécanique est un contact de commutation électrique, un commutateur électrique, un relais ou un relais bistable.

**5.** Système de batterie selon la revendication 2, 3 ou 4, **caractérisé en ce que** la batterie (3) est une batterie lithium-ion.

**6.** Système de batterie selon l'une quelconque des revendications 2 à 5, **caractérisé en ce que** le consommateur (2) est une charge (2) à alimenter en énergie électrique et/ou un générateur (9) produisant de l'énergie électrique.

**7.** Système de batterie selon l'une quelconque des revendications 2 à 6, **caractérisé en ce que** le moyen (8) est réalisé pour produire une impulsion de courant pour tester la fonctionnalité.

**8.** Système de batterie selon l'une quelconque des revendications 2 à 7, **caractérisé en ce que** le semi-conducteur de puissance (10) est un transistor MOSFET.

**9.** Système de batterie selon l'une quelconque des revendications 2 à 8, **caractérisé en ce que** le circuit de dérivation (12) comprend deux transistors MOSFET.

**10.** Système de batterie selon l'une quelconque des revendications 2 à 9, **caractérisé en ce qu'**une borne électrique (4) est prévue pour connecter la ligne d'alimentation du consommateur (2), **en ce qu'**une ligne de liaison électrique (5) est prévue de la batterie (3) à la borne (4), et **en ce que** l'élément d'interruption (7) est disposé dans la ligne de liaison électrique (5).

**11.** Système de batterie selon la revendication 10, **caractérisé en ce qu'**une résistance électrique (6) est disposée dans ladite une ligne de liaison électrique (5) pour mesurer le courant jusqu'au consommateur (2).

**12.** Système de batterie selon l'une quelconque des revendications 2 à 11, **caractérisé en ce qu'**un microprocesseur (13) est prévu pour commuter l'élément d'interruption (7) et/ou pour piloter le moyen (8) afin de tester la fonctionnalité de l'élément d'interruption (7) servant à l'interruption de la liaison électrique.

**13.** Système de batterie selon la revendication 12, **caractérisé en ce que** le microprocesseur (13) sert au pilotage du circuit pour produire un courant d'essai et/ou au pilotage du circuit de dérivation (12).

Fig. 1

Fig. 2

Fig. 3

Fig. 4

Fig. 5

1: Kontakt offen, Anfangszustand

2: Kontakt geschlossen, By-Pass Strom = $I_{min}$ (~0A)  abhängig von Kontaktwiderstand

3: By-Pass Transistoren eingeschaltet, By-Pass Strom bleibt unverändert = $I_{min}$ (~0)

4: Kontakt offen; Strom von der Batterie wird gemessen

5: Teststrom ($I_T$) eingeschaltet; → Messtrom steigt an

6: Teststrom ($I_T$) ausgeschaltet; → Messtrom steigt ab

7: Kontakt geschlossen wenn der Kontaktwiderstand niedrig ist (< 5 mI $\Omega$), so wird nahe zu kein Strom über die By-Pass MOSFET Transistoren hinzugefügt

Kontakt

By-Pass

Teststrom

max Strommessung

i.e. 200mA Teststrom

Entladestrom zum Bordnetz

## Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2013005528 A
- DE 102008040810 A1
- DE 102012105660 A1
- US 2006139006 A1
- JP 2014239132 A
- DE 102011004516 A1
- DE 1020122013159 A1
- DE 60017311 T2
- US 20150035539 A1
- DE 102011003279 A1